# EUROPEAN PATENT APPLICATION

(11) **EP 3 070 601 A1**
(43) Date of publication of application: **21.09.2016**
(21) Application number: 15188447.5
(22) Date of filing: 06.10.2015
(51) Int. Cl.: G06F 9/445

(54) **ELECTRIC APPARATUS AND METHOD OF UPDATING FIRMWARE OF ELECTRIC APPARATUS**

(30) Priority: 16.03.2015 KR 20150036098
(71) Applicant: LG Electronics Inc., Seoul 07336 (KR)
(72) Inventor: KIM, Museung, Seoul 08592 (KR); LEE, Suhwan, Seoul 08592 (KR)
(74) Representative: Vossius & Partner Patentanwälte Rechtsanwälte mbB

(57) **Abstract**

The electric apparatus capable of communicating with a terminal or an external server includes: a communication module mounted in the electric apparatus and communicating with the terminal or the external server in a wired or wireless manner; an update performing unit performing an update of firmware received from the terminal or the external server; and a controller, wherein the communication module comprises a product information confirming unit for confirming information on the electric apparatus in which the communication module is mounted, and the control unit requests a firmware file from the external server or the terminal based on the information confirmed by the product information confirming unit.

## Description

### BACKGROUND

### 1. Field

The present disclosure relates to an electric apparatus, and a method of updating firmware of the electric apparatus.

### 2. Background

Generally, electric apparatuses provided at home include a washing machine, a refrigerator, a cooking device, or a vacuum cleaner. Conventional electric apparatuses only performed an original function, and did not receive information from the outside.

Recently, as disclosed in Korean Patent Application Laid-Open publication No. 2012-0067033, a communication unit is installed in an electric apparatus, and it has become possible for the electric apparatus to communicate with other products and to perform power management, operation control, and the like.

Also, recently a system in which an electric apparatus is controlled by a terminal, such as a smart phone, a network is built between electric apparatuses provided at home through an application executed in the terminal, and the network is integrally managed is being developed.

The electric apparatus is connected with an external Internet network through a mounted communication module. The communication module may include a Wi-Fi module and a Zigbee module.

However, in the case of an electric apparatus provided at home, such as a washing machine, a refrigerator, an air conditioner, and the like, various functions are implemented depending on product lines, so the communication module is operated differently depending on the product. Thus, the type of communication module mounted in each of products varies, so the communication module is separately manufactured depending on the product. Thus, there is a difficulty due to this. Further, an external server providing firmware for performance or additional functionality of the electric apparatus through communication goes through a complicated process to correspond to each of communication modules varying depending on the product, so a user and a manufacturer had inconvenience in operation and management of the electric apparatus.

### SUMMARY

The present disclosure is directed to providing an electric apparatus including a communication module applicable to various products, and a method of updating firmware of the electric apparatus.

According to one aspect of the present disclosure, an electric apparatus capable of communicating with a terminal or an external server may include a communication module mounted in the electric apparatus and configured to communicate with the terminal or the external server in a wired or wireless manner, and a controller connected to the communication module.

The electric apparatus may further include an update performing unit configured to update firmware received from the terminal or the external server.

The communication module may include a product information confirming unit for confirming information on the electric apparatus in which the communication module is mounted.

The control unit requests a firmware file from the terminal or the external server based on the information confirmed by the product information confirming unit.

The product information confirming unit may confirm the information on the electric apparatus through user input through an operation unit provided on the electric apparatus.

The electric apparatus may further include a memory storing the firmware received from the external server or the information on the electric apparatus.

The product information confirming unit may receive information stored in the memory and confirm the information on the electric apparatus.

The product information confirming unit may receive information input through the terminal from a user and confirm the information on the electric apparatus.

The communication module may communicate with the external server or the terminal by performing Wi-Fi communication.

The electric apparatus may further include an update performing unit performing a firmware update of the electric apparatus by running the received firmware.

The electric apparatus may further include a firmware confirming unit detecting an up-to-date state of the firmware every time the electric apparatus is operated.

A method of updating firmware of an electric apparatus may include receiving product information by a communication module of the electric apparatus; requesting firmware corresponding to the electric apparatus from an external server based on the received product information; receiving the firmware from the external server; and performing an update based on the received firmware.

The requesting of the firmware from the external server and the transmitting of the firmware to the electric apparatus may be performed through a user terminal.

The communication module may communicate with the external server or the terminal by performing Wi-Fi communication.

The communication module receives product information from a product information confirming unit, the product information confirming unit receives information stored in a memory provided in the electric apparatus and confirms information on the electric apparatus.

The communication module receives product information from a product information confirming unit, the product information confirming unit confirms information on the electric apparatus through user input through an operation unit provided in the electric apparatus.

The electric apparatus according to the present disclosure, and the method of updating the firm of the electric apparatus have the following effects:

First, since a communication module obtains information on the electric apparatus through a product information confirming unit, and requests firmware corresponding to the mounted electric apparatus from an external server based on the obtained information, it is possible to be compatible with all products.

Second, since a product registration is performed through an application of a terminal, and firmware is directly received by the terminal, user convenience is increased.

### BRIEF DESCRIPTION OF THE DRAWINGS

Embodiments will be described in detail with reference to the following drawings in which like reference numerals refer to like elements, and wherein:
Fig. 1 is a drawing schematically illustrating a network system according to an embodiment of the present disclosure;
Fig. 2 is a block diagram of the network system according to the embodiment of the present disclosure;
Fig. 3 is a drawing schematically illustrating a network system according to a second embodiment of the present disclosure;
Fig. 4 is a block diagram of the network system according to the second embodiment of the present disclosure;
Fig. 5 is a sequence diagram schematically illustrating a process of receiving firmware according to the second embodiment of the present disclosure; and
Fig. 6 is a flowchart of a control method of an electric apparatus according to the second embodiment of the present disclosure.

### DETAILED DESCRIPTION

Hereinafter, embodiments of the present disclosure will be described in more detail with reference to the accompanying drawings. The same reference numerals will be used to describe the same or like components, independent of the reference numerals and an overlapping description of the same components will be omitted. Terms "modules", and "units" for components used in the following description are used only in order to easily make a specification. Therefore, the above-mentioned terms do not have meanings or roles that distinguish themselves from each other. Further, in describing the embodiments of the present disclosure, when it is determined that the detailed description of the known art related to the present disclosure may obscure the gist of the present disclosure, the detailed description thereof will be omitted. In addition, it is to be noted that the accompanying drawings are provided only in order to allow the embodiments of the present disclosure to be easily understood. However, it is to be understood that the present disclosure is not limited to the specific exemplary embodiments, but includes all modifications, equivalents, and substitutions included in the spirit and the scope of the present disclosure.

A network system in the present specification receives firmware related to operation, performance, additional functionality and the like of an electric apparatus from the external server through communication, and operates the electric apparatus based on the received item.

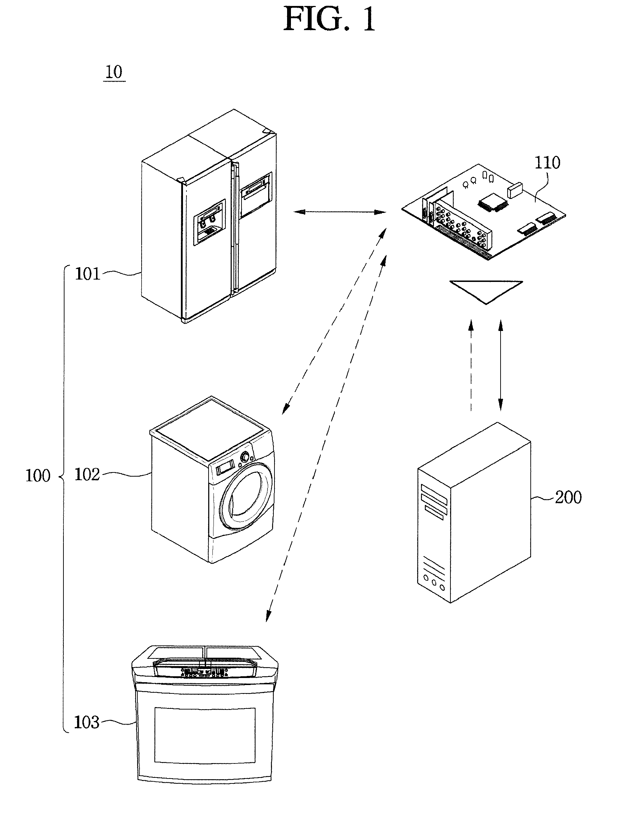

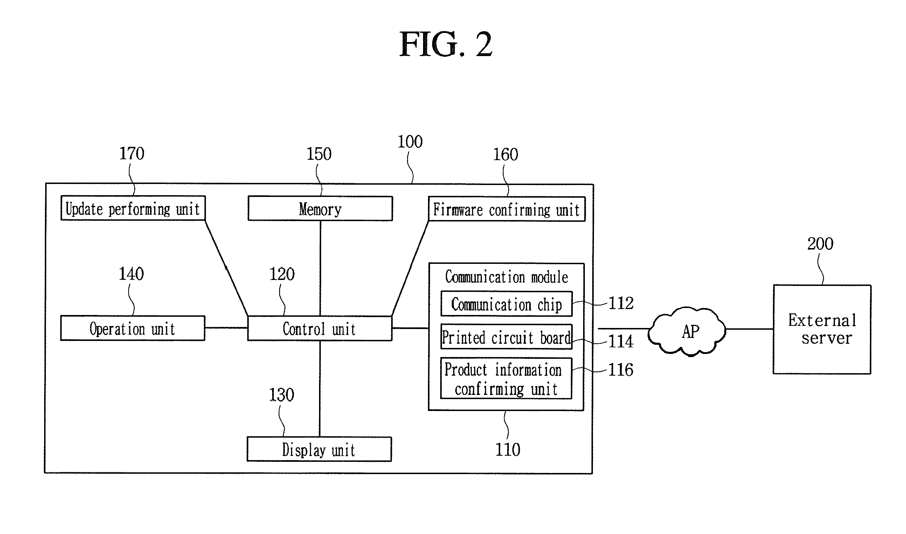

Fig. 1 is a drawing schematically illustrating a network system according to an embodiment of the present disclosure, and Fig. 2 is a block diagram of the network system according to an embodiment of the present disclosure.

Referring to Figs 1 and 2, the network system 10 according to an embodiment of the present disclosure includes an electric apparatus 100, and an external server 200 which is communicably connected with the electric apparatus 100 and transmits firmware to the electric apparatus 100.

The electric apparatus 100 may include one or more home appliances arranged at home, an office and the like, for example a refrigerator 101, a washing machine 102, an air conditioner, a dryer, or a cooking device 103. When the plurality of electric apparatuses 100 are provided, firmware received through a network in a home may be transmitted to or received from another electric apparatus between the electric apparatuses 100.

Also, the electric apparatus 100 includes a communication module 110 connecting the electric apparatus 100 with an external Internet network. The communication module 110 includes a printed circuit board 114 provided in the electric apparatus 100 and a communication chip 112 installed on the printed circuit board.

Specifically, the communication module 110 which has a configuration to enable wired or wireless communication between the electric apparatus 100 and the external server 200 and connects the electric apparatus 100 with one or more networks. Therefore, the electric apparatus 100 may communicate with the external server 200 through the communication module 110. A communication method of the communication module 110 may be performed using at least one of technologies such as Bluetooth™, Radio frequency identification (RFID), infrared data association (IrDA), Ultra Wideband (UWB), ZigBee, Near field communication (NFC), wireless-fidelity (Wi-Fi), Wi-Fi Direct, and Wireless Universal Serial Bus (Wireless USB).

When the communication module 110 communicates through Wi-Fi, the communication module 110 may be connected with a wireless access point (AP) connecting the electric apparatus 100 with the external Internet network. That is, the communication module 110 connects the electric apparatus 100 with the external Internet network within a predetermined distance of a place where the wireless access point (AP) is installed.

The electric apparatus 100 may include a control unit 120, a display unit 130, an operation unit 140, a memory 150, a firmware confirming unit 160, and an update performing unit 170. The electric apparatus 100 described on the specification may include components more or less than those mentioned above.

The control unit 120 controls a general operation of the electric apparatus 100. The control unit 120 may provide or process appropriate information or a function for operating the electric apparatus 100 by processing or driving a signal, data, information and the like input or output through the components.

The display unit 130 displays information on operation and state of the electric apparatus 100. The information on the operation and state may include information on a malfunction, information on an operation state, information on an update and the like. Therefore, the display unit 130 displays information on the operation and state of the electric apparatus 100 to a user through a display unit (not shown) provided on the exterior or a notification message.

The operation unit 140 is a component into which an operation command for operating the electric apparatus 100 is input by a user. In other words, the operation unit 140 is understood as a user input unit to perform a function of the electric apparatus 100 through a user's manipulation. When the display unit 130 is configured as a display screen provided on the exterior of the electric apparatus 100, the operation unit 140 may be configured as a touch sensor into which a command is input through a screen touch.

The memory 150 stores the firmware received from the external server 200. Therefore, the update performing unit 170 performs an update through the firmware stored in the memory 150, so the electric apparatus 100 may perform a firmware update.

The firmware confirming unit 160 determines whether an update of the electric apparatus 100 is required or not and whether the update is possible or not. That is, the firmware confirming unit 160 determines whether the firmware update of the electric apparatus 100 is currently required or not by comparing information on states of the firmware stored in the memory 150 and the electric apparatus 100 with the information received from the external server 200.

The communication module 110 includes a product information confirming unit 116. The product information confirming unit 116 confirms information on the electric apparatus having the communication module 110 mounted therein among various electric apparatuses including a washing machine, a refrigerator, an air conditioner, a cooking device, and the like. The product information may be inputted by a user's manipulation through the operation unit 140 or may be confirmed through information received from the memory 150.

Therefore, the product information confirming unit 116 confirms information on the electric apparatus 100 in which the communication module 110 is mounted, and the control unit 120 determines the firmware that is appropriate for the electric apparatus 100 and should be received from the external server 200 based on the confirmation.

Conventionally, communication modules had to be separately manufactured to correspond to functions of products for each product. However, according to the embodiment, the product information confirming unit 116 confirms information on the electric apparatus 100 in which the communication module 110 is mounted, and thus the electric apparatus 100 may request firmware corresponding to each electric apparatus 100 by communicating with the external server 200 and receive the firmware.

For example, initially, when the communication module 110 is provided in the refrigerator 101, the product information confirming unit 116 recognizes that the electric apparatus is the refrigerator 101 and receives firmware required for the refrigerator 101 from the external server 200. When the electric apparatus in which the communication module 110 is mounted is changed from the refrigerator 101 to the washing machine 102, the product information confirming unit 116 may receive firmware required to operate the washing machine 102 from the external server 200 by recognizing that the electric apparatus is the washing machine 102. Also, the external server 200 may transmit the firmware required for the electric apparatus 100 based on information received from the product information confirming unit 116.

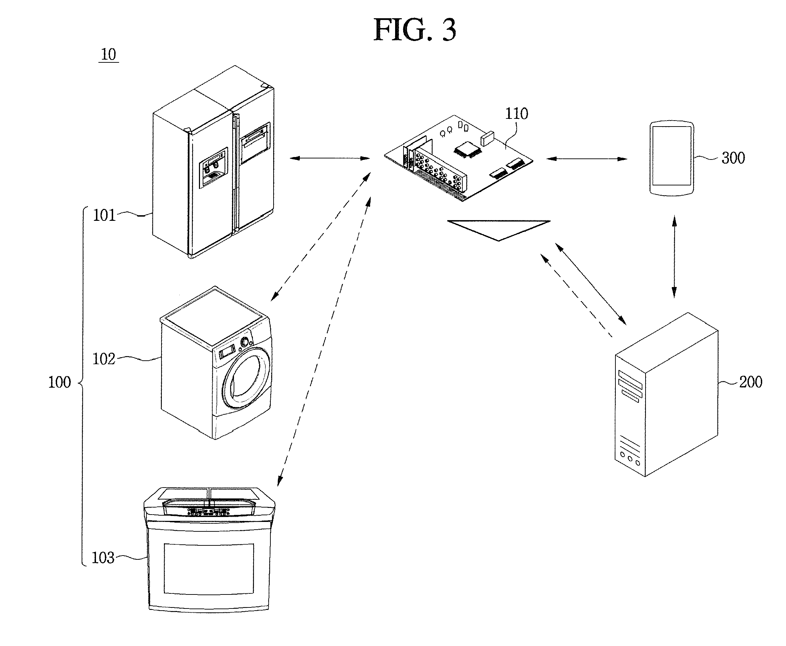

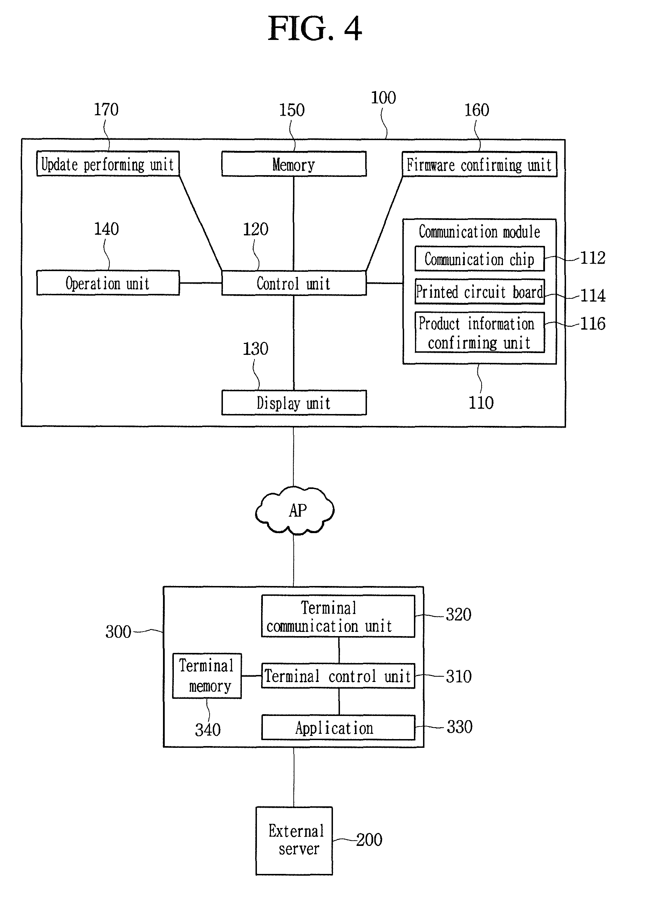

Fig. 3 is a drawing schematically illustrating a network system according to a second embodiment of the present disclosure, and Fig. 4 is a block diagram of the network system according to the second embodiment of the present disclosure.

The exemplary embodiment is identical to the first embodiment except for a firmware receiving system. Hereinafter, specific portions of the exemplary embodiment will be described, and portions that are the same as those of the first exemplary embodiment can be understood with reference to the first exemplary embodiment.

Referring to Figs. 3 and 4, the network system according to another embodiment of the present disclosure includes an electric apparatus 100, an external server 200 for transmitting firmware run in the electric apparatus 100, and a terminal 300 for receiving the firmware from the external server 200 and transferring the firmware to the electric apparatus 100.

The terminal 300 may include a mobile phone, a smart phone, a laptop computer, a terminal for digital broadcasting, a personal digital assistant (PDA), a potable multimedia player (PMP), a navigation device, a slate PC, a tablet PC, an ultrabook, and a wearable device, such as a smartwatch, smart glasses, and a head mounted display (HMD).

The terminal 300 includes a terminal control unit 310 for controlling execution of a function of the terminal 300, a terminal communication unit 320 for joining a network to communicate with the external server 200, and a terminal memory 340 for storing information received from the external server 200. An application 330 for transmitting an item about the electric apparatus 100 and receiving firmware through connection with the external server 200 is installed in the terminal 300.

The terminal communication unit 320, like the communication module 110, enables wired or wireless communication between the terminal 300 and the electric apparatus 100 or the terminal 300 and the external server 200, in which the terminal 300 is connected with the external server 200 or the electric apparatus 100 through the terminal communication unit 320. For example, the terminal 300 may be connected with the external server 200 through a wired or wireless Internet by operating the application 330, and may be connected with the electric apparatus 100 through local area network (LAN).

The application 330 is downloaded from an application store connected through the Internet to the terminal 300, and is operated in the terminal 300. The application 230 connects the terminal 300 with the external server 200, and a user interface (UI) is implemented so as to download the firmware provided from the external server 200. In addition, in the application 230 operated by the user, a menu for transmitting an item about the electric apparatus 100 to the external server 200 and a menu for controlling the operation of the electric apparatus 100 may be implemented.

Hereinafter, a process in which the electric apparatus 100 updates firmware will be described.

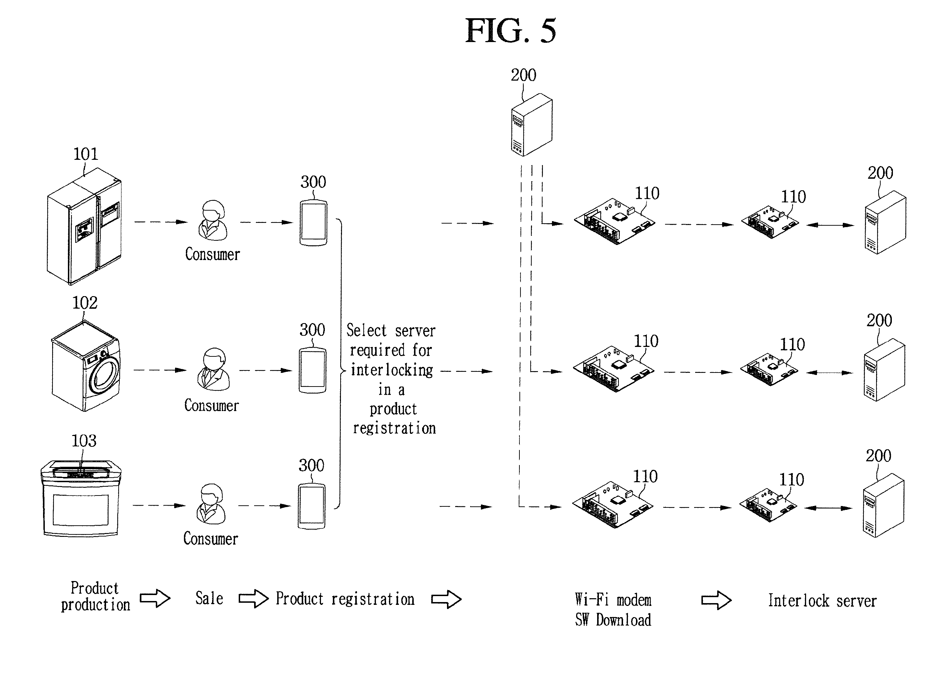

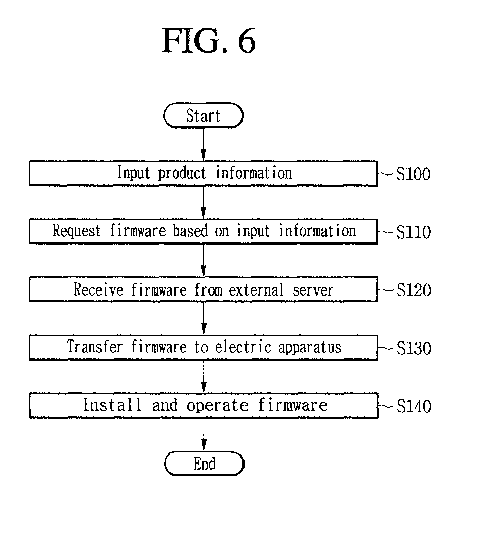

Fig. 5 is a sequence diagram schematically illustrating a process of receiving a firmware according to the second embodiment of the present disclosure, and Fig. 6 is a flowchart of a control method of and electric apparatus according to the second embodiment of the present disclosure.

Referring to Figs. 5 and 6, a product is released from a manufacturer, and the communication module 110 is mounted in the electric apparatus 100. The same communication modules 110 are mounted for the communication of the electric apparatus 100 regardless of classification of the electric apparatus 100 including the refrigerator 101, the washing machine 102, and the cooking device 103.

The electric apparatus 100 is supplied to a home, and information on the electric apparatus 100 is input into the communication module 110 and the external server 200 (S100). The information on the electric apparatus 100 may be information on the classification of the electric apparatus in which the communication module 110 is mounted.

For input of information to the communication module 110, by inputting product information to the operation unit 140 through a user's operation, the control unit 120 may transfer the input product information to the product information confirming unit 116 or may directly perform input through the information stored in the memory 150 without a user's input.

For input of information to the external server 200, the user may perform input by being connected to the external server 200 through the application 330 executed in the terminal 300, or the communication module 110 may transfer the content received from the product information confirming unit 116 by being connected to the external server 200.

Therefore, the electric apparatus 100 or the terminal 300 requests firmware from the external server 200 based on the input information. (S110) The firmware for operating the electric apparatus, as described above, varies with the classification of the electric apparatus, and thus the external server 200 transmits the firmware corresponding to the electric apparatus 100 to the electric apparatus 100 or the terminal 300 based on the received information on the electric apparatus 100. (S120)

When the electric apparatus 100 receives the firmware from the external server 200, the received firmware is stored in the memory 150, and the firmware update of the electric apparatus 100 is performed through the update performing unit 170. When the firmware update is completed, the electric apparatus 100 is rebooted and driven, and detects whether the firmware installed through the firmware confirming unit 160 is up-to-date or not every time the electric apparatus is driven.

When the terminal 300 receives the firmware from the external server 200, the received firmware is stored in the terminal memory 340. The terminal control unit 310 transfers the firmware stored in the terminal memory 340 to the electric apparatus 100 through the terminal communication unit 320 by communicating with the electric apparatus 100. (S130)

Further, when the electric apparatus 100 receives the firmware from the terminal 300, as described above, the firmware update is performed in the electric apparatus 100. (S140)

In short, the electric apparatus 100 in which the communication module 110 is mounted requests firmware from the external server 200 based on information recognized by the product information confirming unit 116, and performs the firmware update when the firmware is received from the external server 200. Therefore, the electric apparatus 100 may be driven according to the up-to-date firmware. When the new firmware is released to the external server 200, the communication module 110 communicates with the external server 200, and thus an operation for receiving a new firmware may be performed.

## Claims

1. An electric apparatus capable of communicating with a terminal or an external server, the electric apparatus comprising:
a communication module mounted in the electric apparatus and configured to communicate with the terminal or the external server in a wired or wireless manner;
an update performing unit configured to update firmware received from the terminal or the external server; and
a controller connected to the communication module,
wherein the communication module includes a product information confirming unit which confirms information on the electric apparatus in which the communication module is mounted, and
the control unit requests a firmware file from the terminal or the external server based on the information confirmed by the product information confirming unit.

2. The electric apparatus according to claim 1, wherein the product information confirming unit confirms the information on the electric apparatus through user input through an operation unit provided in the electric apparatus.

3. The electric apparatus according to claim 1, further comprising a memory which stores the firmware received from the external server or the information on the electric apparatus.

4. The electric apparatus according to claim 3, wherein the product information confirming unit receives information stored in the memory and confirms the information on the electric apparatus.

5. The electric apparatus according to claim 1, wherein the product information confirming unit receives information input through the terminal and confirms the information on the electric apparatus.

6. The electric apparatus according to claim 1, wherein the communication module communicates with the external server or the terminal by performing Wi-Fi communication.

7. The electric apparatus according to claim 1, further comprising a firmware confirming unit which detects an up-to-date state of the firmware every time the electric apparatus is operated.

8. A method of updating firmware of an electric apparatus, the method comprising:
receiving product information by a communication module of the electric apparatus;
requesting firmware corresponding to the electric apparatus from an external server based on the received product information;
receiving the firmware from the external server; and
performing an update based on the received firmware.

9. The method according to claim 8, wherein the requesting of the firmware from the external server and the transmitting of the firmware to the electric apparatus are performed through a user terminal.

10. The method according to claim 9, wherein the communication module communicates with the external server or the terminal by performing Wi-Fi communication.

11. The method according to claim 8, wherein the communication module receives product information from a product information confirming unit, the product information confirming unit receives information stored in a memory provided in the electric apparatus and confirms information on the electric apparatus.

12. The method according to claim 8, wherein the communication module receives product information from a product information confirming unit, the product information confirming unit confirms information on the electric apparatus through user input through an operation unit provided in the electric apparatus.

## Amended claims

### Amended claims in accordance with Rule 137(2) EPC.

1. An electric apparatus capable of communicating with a terminal or an external server, the electric apparatus comprising:
a communication module mounted in the electric apparatus and configured to communicate with the terminal or the external server in a wired or wireless manner;
an update performing unit configured to update firmware received from the terminal or the external server; and
a control unit connected to the communication module,
**characterized in that** the communication module includes a product information confirming unit which confirms information about the electric apparatus in which the communication module is mounted, wherein the product information is confirmed through information received from a memory, and
the control unit requests a firmware file corresponding to the information confirmed by the product information confirming unit from the terminal or the external server via communication module.

2. The electric apparatus according to claim 1, wherein the product information confirming unit receives information input through the terminal and confirms the information about the electric apparatus.

3. The electric apparatus according to claim 1, wherein the communication module communicates with the external server or the terminal by performing Wi-Fi communication.

4. The electric apparatus according to claim 1, further comprising a firmware confirming unit which detects an up-to-date state of the firmware every time the electric apparatus is operated.

5. A method of updating firmware of an electric apparatus according to any one of claims 1 to 4, the method comprising:
receiving product information by a communication module of the electric apparatus;
requesting firmware corresponding to the electric apparatus from an external server based on the received product information;
receiving the firmware from the external server; and
performing an update based on the received firmware.

6. The method according to claim 5, wherein the requesting of the firmware from the external server and the transmitting of the firmware to the electric apparatus are performed through a user terminal.

7. The method according to claim 6, wherein the communication module communicates with the external server or the terminal by performing Wi-Fi communication.

8. The method according to claim 5, wherein the communication module receives product information from a product information confirming unit, the product information confirming unit receives information stored in a memory provided in the electric apparatus and confirms information about the electric apparatus.
